# EUROPÄISCHE PATENTSCHRIFT

(11) **EP 1 176 048 B1**
(45) Veröffentlichungstag und Bekanntmachung des Hinweises auf die Patenterteilung: **12.10.2005**
(21) Anmeldenummer: 01117075.0
(22) Anmeldetag: 13.07.2001
(51) Int. Cl.: B60N 2/02

(54) **Fahrzeugsitz mit neigungseinstellbarem Sitzkissen**
Vehicle seat with inclination adjustable cushion
Siège de véhicule avec assise réglable en inclinaison

(30) Priorität: 29.07.2000 DE 10037327
(43) Veröffentlichungstag der Anmeldung: 30.01.2002
(73) Patentinhaber: KEIPER GmbH & Co. KG, 67657 Kaiserslautern (DE)
(72) Erfinder: Dill, Thomas, 67655 Kaiserslautern (DE); Mühlberger, Joachim, 67271 Obersülzen (DE)
(74) Vertreter: Patentanwälte Hosenthien-Held und Dr. Held

(56) Entgegenhaltungen:
- DE-A- 19 740 045
- DE-U- 29 906 108
- US-A- 4 915 447

## Beschreibung

Die Erfindung betrifft einen Fahrzeugsitz, insbesondere einen Kraftfahrzeugsitz, mit den Merkmalen des Oberbegriffs des Anspruches 1.

Bei einem aus der US 4 915 447 A bekannten Fahrzeugsitz dieser Art ist eine zweiteilige, mittels Linearführungen in ihrer Länge einstellbare und mittels Nockens in ihrer Neigung einstellbare Sitzschale vorgesehen. Die DE 299 06 108 U 1 zeigt einen Fahrzeugsitz mit einem vorderen Sitzschalenteil, der auf einem vorderen Querrohr gelagert ist und mittels Kurbelarmen an Kurbelschwingen einer drehbaren Kurbelwelle angelenkt ist, mittels welcher der vordere Sitzschalenteil längseinstellbar ist. In der DE 197 40 045 A1 wird vorgeschlagen, die Sitzschale mittels eines Drehschiebegelenks, bestehen aus einer Kulisse und einem Bolzen, zu lagern, welches für ein Verschieben als Ausgleich in Längsrichtung des Fahrzeugsitzes sorgt.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Dadurch, dass die Führung in einem auf der Unterseite der Sitzschale vorgesehenen, hinteren Lager ausgebildet ist und ein hinteres Querrohr als feststehenden Teil des Sitzrahmens wenigstens teilweise umschließt, vereinfacht und verbilligt sich die Herstellung des erfindungsgemäßen Fahrzeugsitzes. Die Anbringung der Sitzschale am beweglichen Teil des Sitzrahmens ersetzt die Drehfunktion eines Drehschiebegelenks, während die Führung für den Längsausgleich bei der Neigungseinstellung sorgt. Durch diese Ausbildung werden die Bolzen und die Drehschiebegelenke eingespart. Eine geöffnete Ausbildung der Führung ermöglicht eine einfachere Montage, bei welcher die Sitzschale auf das hintere Querrohr aufgeschoben oder dort eingehängt wird. Eine Aussparung im Material der Führung kann durch ihre Form eine Vorspannkraft beeinflussen.

Vorzugsweise ist die Führung so geformt, dass bei einer Neigungseinstellung des Sitzkissens der Hüftpunkt eines Benutzers des Fahrzeugsitzes näherungsweise unverändert bleibt oder sich nur in sehr geringem Maße verschiebt. Dies verringert das Betätigungsmoment, entlastet bei einer motorischen Einstellung den Neigungseinsteller und seinen Antrieb, und erhöht den Bedienkomfort im Falle einer manuellen Einstellung. Die Führung kann hierzu beispielsweise leicht gekrümmt sein, wobei der Krümmungsmittelpunkt in Richtung oder in der Nähe des Hüftpunktes liegen kann. Der Hüftpunkt bildet dann - zumindest näherungsweise - eine Art Drehpunkt für die Bewegung der Sitzschale.

Der Neigungseinsteller kann so angeordnet sein, dass er das bewegliche Teil des Sitzrahmens von einer waagrechten Position aus nur nach unten schwenkt. Dieser Einstellbereich gewährleistet ebenfalls, dass sich während der Neigungseinstellung der Hüftpunkt in seiner Lage kaum verändert.

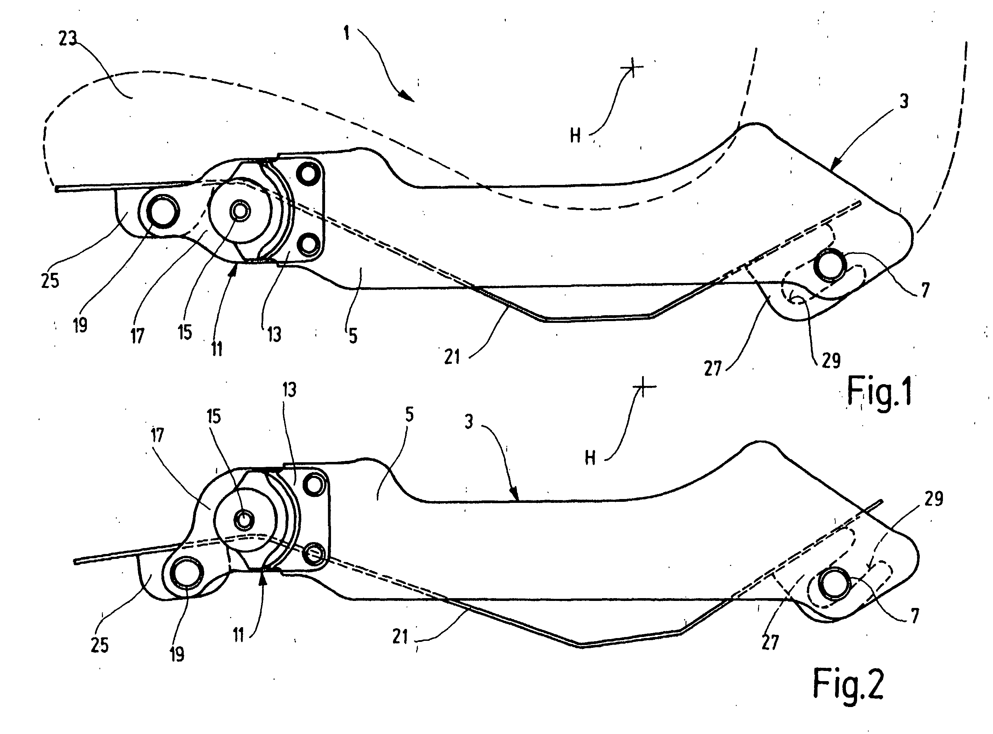

Im folgenden ist die Erfindung anhand eines in der Zeichnung dargestellten Ausführungsbeispiels näher erläutert. Es zeigen
- Fig. 1: eine Teilansicht des Ausführungsbeispiels mit einer steilen Neigung der Sitzschale, wobei Sitzkissen und Rückenlehne nur angedeutet sind,
- Fig. 2: eine Teilansicht entsprechend Fig. 1 mit einer flachen Neigung der Sitzschale ohne Sitzkissen und Rückenlehne, und

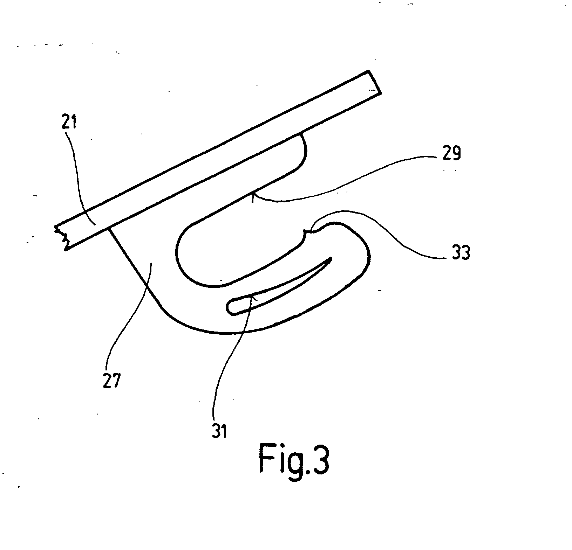

- Fig. 3: eine vergrößerte Teilansicht des hinteren Lagers.

Ein Fahrzeugsitz 1 für ein Kraftfahrzeug weist ein nicht näher dargestelltes Sitzgestell auf, welches einen Sitzrahmen 3 trägt. Die nachfolgenden Richtungsangaben beziehen sich auf die gewöhnliche Anordnung des beispielsweise als Fahrersitz dienenden Fahrzeugsitzes 1 im Kraftfahrzeug und dessen normale Fahrtrichtung. Der Sitzrahmen 3 weist zwei Sitzrahmenseitenteile 5 auf, welche auf der linken bzw. auf der rechten Seite des Fahrzeugsitzes 1 angeordnet sind. Die beiden Sitzrahmenseitenteile 5 sind an ihrem hinteren Ende durch ein hinteres Querrohr 7 fest miteinander verbunden. Das hintere Querrohr 7 ist horizontal und quer zur Fahrtrichtung angeordnet, d.h. es steht senkrecht zu den Sitzrahmenseitenteilen 5. Am Sitzrahmen 3 ist über nicht näher dargestellte Beschläge eine in der Zeichnung nur angedeutete Rückenlehne angebracht.

Am vorderen Ende des linken Sitzrahmenseitenteils 5 ist ein Neigungseinsteller 11 angeordnet, welcher als Doppeltaumelgetriebe ausgebildet ist. Der Neigungseinsteller 11 weist ein plattenförmiges Hohlradgestell 13, mit welchem er am Sitzrahmenseitenteil 5 angebracht ist, eine im Hohlradgestell 13 gelagerte Welle 15, welche parallel zum hinteren Querrohr 7 angeordnet ist, und einen ebenfalls plattenförmigen Hohlradabtrieb 17 auf, welcher von der Welle 15 angetrieben relativ zu dem Hohlradgestell 13 schwenkbar ist, wobei die Welle 15 die Schwenkachse bildet. Am vorderen Ende des rechten Sitzrahmenseitenteils 5 ist ein nicht dargestelltes Gelenk vorgesehen, dessen Schwenkachse mit der Welle 15 fluchtet. Der Hohlradabtrieb 17 und der entsprechende Gelenkarm auf der anderen Seite des Fahrzeugsitzes 1 sind durch ein parallel zum hinteren Querrohr 7 angeordnetes, vorderes Querrohr 19 fest miteinander verbunden.

Eine Sitzschale 21, vorzugsweise aus Kunststoff, Aluminium- oder Stahlblech, trägt ein in der Zeichnung nur angedeutetes Sitzkissen 23. Die Sitzschale 21 ist an ihrem vorderen Ende auf ihrer Unterseite mittels eines vorderen Lagers 25 am vorderen Querrohr 19 angebracht, beispielsweise angeschraubt oder aufgeclipst. An ihrem hinteren Ende weist die Sitzschale 21 ein hinteres Lager 27 auf, welches eine Führung 29 aufweist. Das Lager 27 kann aus den gleichen Materialien bestehen und beispielsweise als gesondertes Teil angeclipst oder einstückig angeformt sein. Die Führung 29 ist als eine maulförmige, schräg nach hinten und oben geöffnete Aufnahme und zugleich zur Seite hin geöffnete, näherungsweise in Längsrichtung des Fahrzeugsitzes 1 verlaufende Kulisse ausgebildet. Die Führung 29 nimmt das hintere Querrohr 7 auf, so daß die Sitzschale 21 mittels des hinteren Lagers 27 auf dem hinteren Querrohr 7 gelagert ist. Das hintere Querrohr 7 ist jedoch grundsätzlich innerhalb der Führung 29 beweglich angeordnet, wobei die Führung 29 als Kulisse wirkt. Eine Ausbildung des hinteren Lagers 27 aus Kunststoff sorgt bei einer entsprechenden Dimensionierung der Führung 29 und des hinteren Querrohres 19 für eine klapperfreie Lagerung.

Eine im hinteren Lager 27 ausgebildete, längliche, keilförmige Aussparung 31, welche näherungsweise in konstantem Abstand zur Führung 29 verläuft, verjüngt sich zu demjenigen Ende hin, welches dem offenen Ende der Führung 29 zugeordnet ist. Die Aussparung 31 sorgt über die Länge der Führung 29 hinweg für eine konstante Vorspannkraft, welche auf das hintere Querrohr 19 wirkt. Eine Nase 33, welche im Bereich des offenen Ende der Führung 29 angeordnet ist und leicht in den Innenraum der Führung 29 ragt, dient zur Herstellung einer Clipsverbindung, welche sich nach Einführen des hinteren Querrohres 19 schließt und als Vorsicherung wirkt.

Zur Neigungseinstellung des Sitzkissens 23 wird mit der Welle 15 der Neigungseinsteller 11 angetrieben, welcher die Höhe des vorderen Querrohrs 19 ändert. Dadurch wird das vordere Ende der Sitzschale 21 angehoben oder abgesenkt, während das hintere Ende sich nur unwesentlich bewegt. Im Bereich des hinteren Endes der Sitzschale 21 erfolgt ein Längsausgleich durch die Führung 29 mit ihrer in Längsrichtung des Fahrzeugsitzes weisenden Komponente, während das runde Profil des hinteren Querrohrs 19 eventuell notwendige Ausgleichsdrehbewegungen ermöglicht. Insgesamt ergibt sich eine Neigungsänderung des Sitzkissens 23. Die Führung 29 ist leicht nach oben gekrümmt, so daß bei der Neigungsänderung des Sitzkissens 23 der Hüftpunkt H eines Benutzers des Fahrzeugsitzes 1 in nahezu unveränderter Höhe verbleibt. Es muß dann keine zusätzliche Hubarbeit geleistet werden, was den Neigungseinsteller 11 und seinen Antrieb entlastet.

Zur Montage des Fahrzeugsitzes 1 wird die Sitzschale 21 zunächst oben über dem vorderen Querrohr 19 positioniert, mit ihrem hinteren Lager 27 und dessen Führung 29 auf das hintere Querrohr 7 geschoben, und dann von oben her auf dem vorderen Querrohr 19 angebracht.

### Bezugszeichenliste

- 1: Fahrzeugsitz
- 3: Sitzrahmen
- 5: Sitzrahmenseitenteil
- 7: hinteres Querrohr
- 11: Neigungseinsteller
- 13: Hohlradgestell
- 15: Welle
- 17: Hohlradabtrieb
- 19: vorderes Querrohr
- 21: Sitzschale
- 23: Sitzkissen
- 25: vorderes Lager
- 27: hinteres Lager
- 29: Führung
- 31: Aussparung
- 33: Nase
- H: Hüftpunkt

## Patentansprüche

1. Fahrzeugsitz, insbesondere Kraftfahrzeugsitz, mit einem Sitzrahmen (3), einer am Sitzrahmen (3) angebrachten Sitzschale (21), welche ein Sitzkissen (23) trägt, und einem Neigungseinsteller (11), mittels dessen ein Teil (19) des Sitzrahmens (3) und/oder der Sitzschale (21) beweglich ist, um die Neigung des Sitzkissens (23) einzustellen, wobei die Sitzschale (21) einerseits an dem beweglichen Teil (19) des Sitzrahmens (3) angebracht ist und andererseits an einem feststehenden Teil (7) des Sitzrahmens (3) mittels einer Führung (29) beweglich gelagert ist, **dadurch gekennzeichnet, dass** die Führung (29) in einem auf der Unterseite der Sitzschale (21) vorgesehenen, hinteren Lager (27) ausgebildet ist und ein hinteres Querrohr (7) als feststehenden Teil des Sitzrahmens (3) wenigstens teilweise umschließt.

2. Fahrzeugsitz nach Anspruch 1, **dadurch gekennzeichnet, dass** die Führung (29) als teilweise geöffnete Kulisse ausgebildet ist.

3. Fahrzeugsitz nach Anspruch 2, **dadurch gekennzeichnet, dass** die Führung (29) in Fahrtrichtung nach hinten geöffnet ist.

4. Fahrzeugsitz nach einem der Ansprüche 1 bis 3, **dadurch gekennzeichnet, dass** das hintere Lager (27) eine im Abstand zur Führung (29) verlaufende Aussparung (31) aufweist.

5. Fahrzeugsitz nach einem der Ansprüche 1 bis 4, **dadurch gekennzeichnet, dass** das hintere Lager (27) im Bereich der Führung (29) eine Nase (33) zur Herstellung einer Clipsverbindung aufweist.

6. Fahrzeugsitz nach einem der Ansprüche 1 bis 5, **dadurch gekennzeichnet, dass** bei einer Neigungseinstellung des Sitzkissens (23) durch die Form der Führung (29) der Hüftpunkt (H) eines Benutzers des Fahrzeugsitzes (1) näherungsweise unverändert bleibt.

7. Fahrzeugsitz nach einem der Ansprüche 1 bis 6, **dadurch gekennzeichnet, dass** der Neigungseinsteller (11) das bewegliche Teil (19) zwischen einer oberen Position, in welcher das bewegliche Teil (19) in Fahrtrichtung vor dem Neigungseinsteller (11) angeordnet ist, und einer unteren Position, in welcher das bewegliche Teil (19) schräg unterhalb des Neigungseinstellers (11) angeordnet ist, bewegt.

8. Fahrzeugsitz nach einem der Ansprüche 1 bis 7, **dadurch gekennzeichnet, dass** die Sitzschale (21) auf ihrer Unterseite ein vorderes Lager (25) aufweist, welche auf einem vorderen Querrohr (19) des beweglichen Teils des Sitzrahmens (3) aufliegt und an diesem vorderen Querrohr (19) angebracht ist.

## Claims

1. Vehicle seat, in particular a seat for a motor vehicle, having a seat frame (3), a seat shell (21), which is fitted to the seat frame (3) and which carries a seat cushion (23), and an inclination adjuster (11), by means of which a member (19) of the seat frame (3) and/or the seat shell (21) is movable in order to adjust the inclination of the seat cushion (23), the seat shell (21) being fitted at one end to the movable member (19) of the seat frame (3) and being movably supported at the other end on a fixed member (7) of the seat frame (3) by means of a guide (29), **characterised in that** the guide (29) is constructed in a rear bearing (27) which is provided on the underside of the seat shell (21) and at least partially encloses a rear transverse tube (7) which acts as the fixed member of the seat frame (3).

2. Vehicle seat according to claim 1, **characterised in that** the guide (29) is in the form of a partially open slotted member.

3. Vehicle seat according to claim 2, **characterised in that** the guide (29) is open towards the rear in the direction of travel.

4. Vehicle seat according to any one of claims 1 to 3, **characterised in that** the rear bearing (27) has an aperture (31) which extends with spacing from the guide (29).

5. Vehicle seat according to any one of claims 1 to 4, **characterised in that** the rear bearing (27) has, in the region of the guide (29), a lug (33) in order to produce a clip connection.

6. Vehicle seat according to any one of claims 1 to 5, **characterised in that** the hip location (H) of a user of the vehicle seat (1) remains substantially unchanged owing to the shape of the guide (29) when the inclination of the seat cushion (23) is adjusted.

7. Vehicle seat according to any one of claims 1 to 6, **characterised in that** the inclination adjuster (11) moves the movable member (19) between an upper position, in which the movable member (19) is arranged in front of the inclination adjuster (11) in the direction of travel, and a lower position, in which the movable member (19) is arranged in an inclined manner below the inclination adjuster (11).

8. Vehicle seat according to any one of claims 1 to 7, **characterised in that** the seat shell (21) has, at the underside thereof, a front bearing (25) which is supported on a front transverse tube (19) of the movable member of the seat frame (3) and is fitted to that front transverse tube (19).

## Revendications

1. Siège de véhicule, en particulier siège de véhicule automobile, comportant un bâti de siège (3), une coque de siège (21) rapportée sur le bâti de siège (3), laquelle porte un coussin de siège (23), et un dispositif (11) de réglage d'inclinaison, au moyen duquel une partie (19) du bâti de siège (3) et/ou de la coque de siège (21) est déplaçable pour régler l'inclinaison du coussin du siège (23), la coque de siège (21) d'une part étant appliquée sur la partie mobile (19) du bâti de siège (3) et d'autre part étant montée de façon mobile sur une partie fixe (7) du bâti de siège (3) au moyen d'un guidage (29), **caractérisé par le fait que** le guidage (29) est réalisé dans un palier arrière (27) prévu sur le côté inférieur de la coque de siège (21) et entoure au moins en partie un tube transversal arrière (7) en tant que partie fixe du bâti de siège (3).

2. Siège de véhicule selon la revendication 1, **caractérisé par le fait que** le guidage (29) est réalisé sous la forme d'une coulisse partiellement ouverte.

3. Siège de véhicule selon la revendication 2, **caractérisé par le fait que** le guidage (29) est ouvert vers l'arrière dans la direction du déplacement.

4. Siège de véhicule selon l'une des revendications 1 à 3, **caractérisé par le fait que** le palier arrière (27) présente un évidement (31) s'étendant à distance du guidage (29).

5. Siège de véhicule selon l'une des revendications 1 à 4, **caractérisé par le fait que** le palier arrière (27) présente dans la zone de guidage (29) un talon (23) pour la production d'une liaison par clips.

6. Siège de véhicule selon l'une des revendications 1 à 5, **caractérisé par le fait que**, dans le cas d'un réglage d'inclinaison du coussin de siège (23) par la forme du guidage (29), le point de hanche (H) d'un utilisateur du siège de véhicule (1) reste approximativement inchangé.

7. Siège de véhicule selon l'une des revendications 1 à 6, **caractérisé par le fait que** le dispositif (11) de réglage de l'inclinaison déplace la partie mobile (19) entre une position supérieure, dans laquelle la partie mobile (19) est disposée dans la direction du déplacement devant le dispositif (11) de réglage de l'inclinaison, et une position inférieure, dans laquelle la partie mobile (19) est disposée de façon inclinée au-dessous du dispositif (11) de réglage de l'inclinaison.

8. Siège de véhicule selon l'une des revendications 1 à 7, **caractérisé par le fait que** la coque de siège (21) présente sur son côté inférieur un palier avant (25), lequel est rapporté sur un tube transversal avant (19) de la partie mobile du bâti de siège (3) et est appliqué sur ce tube transversal avant (19).
